(19) Europäisches Patentamt
European Patent Office
Office européen des brevets

(11) **EP 1 546 764 B1**

(12) **FASCICULE DE BREVET EUROPEEN**

(45) Date de publication et mention de la délivrance du brevet:
**20.03.2019 Bulletin 2019/12**

(21) Numéro de dépôt: **03778381.8**

(22) Date de dépôt: **01.10.2003**

(51) Int Cl.:
***G01V 1/38*** *(2006.01)*

(86) Numéro de dépôt international:
**PCT/FR2003/002875**

(87) Numéro de publication internationale:
**WO 2004/031807 (15.04.2004 Gazette 2004/16)**

(54) **HYDROPHONES ET SISMOMETRES DE FOND DE MER**

TIEFSEEBODENHYDROPHONE UND SEISMOMETER

OCEAN BOTTOM FLOOR HYDROPHONES AND SEISMOMETERS

(84) Etats contractants désignés:
**AT BE BG CH CY CZ DE DK EE ES FI FR GB GR HU IE IT LI LU MC NL PT RO SE SI SK TR**

(30) Priorité: **02.10.2002 FR 0212159**

(43) Date de publication de la demande:
**29.06.2005 Bulletin 2005/26**

(73) Titulaire: **Institut Francais de Recherche pour l'Exploitation de la Mer (IFREMER)**
**92130 Issy-les-Moulineaux Cedex (FR)**

(72) Inventeurs:
• **AUFFRET, Yves**
**F-29217 Plougonvelin (FR)**
• **PELLEAU, Pascal**
**F-29800 Landerneau (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**US-A- 3 316 531    US-A- 3 820 391**
**US-A- 4 138 658    US-A- 4 446 537**
**US-A- 4 692 906    US-A- 5 189 642**

• **WOODING F B ET AL: "ORB-a new ocean bottom seismic data logger", OCEANS '97. MTS/IEEE CONFERENCE PROCEEDINGS HALIFAX, NS, CANADA 6-9 OCT. 1997, NEW YORK, NY, USA,IEEE, US, vol. 2, 6 October 1997 (1997-10-06), pages 1460-1465, XP010246195, DOI: 10.1109/OCEANS.1997.624212 ISBN: 978-0-7803-4108-1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne des dispositifs du type comportant un hydrophone et une unité d'acquisition de données associée, destinés à être laissés au fond de l'eau le temps d'une session de mesures, pour être ensuite récupérés en surface. Elle concerne plus spécialement de tels dispositifs dits hydrophones de fond de mer (OBH) et séismomètres de fond de mer (OBS).

Ces dispositifs sont utilisés pour mettre en oeuvre des méthodes d'exploration des couches de la croute terrestre les plus profondes, notamment dans le cadre de la recherche pétrolière. Les dispositifs sont disposés sur le fond marin, suite à quoi une onde sonore est émise à intervalles réguliers depuis la surface. L'enregistrement de la réponse du fond de l'eau à cette onde acoustique permet de déterminer l'agencement des couches géologiques et d'en interpréter par exemple la nature. Les données mesurées permettent également d'en déterminer le passé et d'en prévoir l'évolution.

Les hydrophones de fond de mer (OBH) permettent d'enregistrer des ondes sonores qui se sont propagées depuis la surface jusque dans les couches du sous-sol. Les ondes mesurées proviennent de la réflexion et/ou de la réfraction sur ces couches.

Les séismomètres de fond de mer (OBS) sont identiques aux hydrophones (OBH), mais ils comportent, à la place ou en complément de l'hydrophone proprement dit, au moins un capteur sismique dit géophone pour détecter les ondes de cisaillement, ce qui permet notamment de déterminer la teneur en fluide du sous-sol.

De par sa conception même, un hydrophone ou séismomètre de fond (que nous dénommerons également station sismique de fond de mer dans la suite) est complètement autonome. Lorsqu'il est lâché, il lui faut donc une flottabilité négative pour descendre au fond de l'eau. Une fois en place, il mesure les ondes acoustiques dans la bande de fréquence pour laquelle il est programmé. Et en fin d'opération, un ordre acoustique particulier permet de commander un mécanisme redonnant une flottabilité positive à l'appareil pour qu'il remonte à la surface où il sera récupéré. Cette flottabilité positive est obtenue généralement par largage d'un lest.

En pratique, un dispositif de ce type, tel que divulgué par exemple dans le document WO 93/05411 comprend donc essentiellement une structure porteuse à flottabilité positive à laquelle est associé un lest détachable, la structure porteuse contenant les capteurs de mesure, hydrophone et géophones, la centrale d'acquisition de données qui leur est associée, un ensemble assurant le largage du lest, un bloc d'alimentation électrique, et divers autres équipements secondaires servant à la récupération en surface, tels un émetteur VHF et son antenne, et une source lumineuse. Tant la centrale d'acquisition de données que l'ensemble de commande pour le largage du lest, qui sont des unités distinctes, sont protégées comme nécessaire pour des immersions par grands fonds.

Par ailleurs, l'ensemble de largage du lest et son unité de commande se doivent d'être parfaitement fiables. Ce point particulier est traité dans le brevet américain US 4 446 537. Ce brevet décrit un système de largage très complexe et redondant permettant d'assurer la fonction de largage en toute circonstance. A cet effet, l'ensemble de largage a sa propre électronique et il comprend notamment un transducteur pour recevoir un ordre acoustique de largage provenant de la surface.

Le brevet américain US 3 316 531 divulgue un mécanisme de largage pour libérer des objets immergés activé par réception par un hydrophone d'un signal codé émis en surface.

Le brevet américain US 4 138 658 décrit un sismographe comprenant une unité d'acquisition de données permettant d'enregistrer les données de mesure reçues par un détecteur sismique et une unité séparée de circuits électroniques permettant de recevoir et traiter des ordres de largage pour détacher un ballast.

Le document XP010246195 (ORB-A NEW OCEAN BOTTOM SEISMIC DATA LOGGER; Wooding 1997) divulgue un système d'acquisition de données capable de numériser et enregistrer des données provenant d'un ensemble de détecteurs comprenant des hydrophones, des sismomètres courte période et des sismomètres large bande, et un transducteur qui permet la communication de commandes pour l'activer ou le désactiver et qui alimente en énergie le système de largage. Le sismographe de D6 comprend également une électronique de largage spécifique pour commander le dispositif de largage en réponse à une commande reçue par le transducteur.

Le principal inconvénient de ces dispositifs est qu'ils sont encombrants et chers de par la sophistication de leurs divers organes.

Or, en matière de technique de mesures, la tendance pour l'avenir est à la mise en oeuvre de méthodes impliquant le déploiement d'un grand nombre de stations sismiques de fond de mer pour notamment améliorer la répartition spatiale des mesures et donc la finesse des interprétations.

Cela revient à dire qu'il faudrait envisager d'opérer par exemple avec un nombre de 50 à 70 stations dont un seul bateau assurerait le transport et la mise à l'eau, et après émission des ondes de mesure, la récupération. Etant donné le prix et l'encombrement des stations existantes, ceci est actuellement irréaliste.

Aussi, l'invention résulte d'une réflexion sur ce problème, orientée vers la conception de stations sismiques de fond (OBH et OBS) moins chères, moins encombrantes, et donc plus facilement manipulables, tout en étant fiables en ce qui concerne la remontée en surface et performantes en ce qui concerne les mesures.

Selon l'invention, il est prévu de n'utiliser qu'une seule unité électronique commune à l'acquisition de données en provenance des capteurs de mesure et à la commande du mécanisme de largage du lest, et d'utiliser l'hydrophone de mesure pour recevoir la commande de largage du lest provenant de la surface.

Aussi, l'invention concerne une station de fond de mer destinée à effectuer des mesures in situ comprenant une structure porteuse à flottabilité positive à laquelle est associée au moins un lest détachable pour amener ladite structure porteuse au fond de l'eau le temps d'une session de mesure, la structure porteuse comprenant au moins un hydrophone, une unité d'acquisition associée pour enregistrer des données de mesure et un dispositif de largage dudit lest détachable, caractérisée en ce que l'unité d'acquisition de données est en outre apte à commander le dispositif de largage en réponse à un ordre acoustique de largage reçu par l'hydrophone.

L'ordre de largage est de préférence un signal acoustique basse fréquence modulé par un signal porteur ayant, par exemple, une fréquence comprise entre 8 et 12 KHz.

Selon un mode de réalisation préféré, le signal acoustique basse fréquence comprend une pluralité de signaux élémentaires d'un premier type et d'un second type consécutifs représentant une séquence de bits propre à ladite station sismique, les signaux élémentaires du premier type et du second type représentant respectivement des bits de valeur 0 et des bits de valeur 1, ou inversement. Les signaux élémentaires du premier type sont par exemple des signaux modulés linéairement en fréquence depuis la fréquence f1 jusqu'à la fréquence f2, avec f2>f1, et les signaux élémentaires du second type sont des signaux modulés linéairement en fréquence depuis la fréquence f2 jusqu'à la fréquence f1, ou inversement.

Pour détecter un ordre de largage dans le signal reçu par l'hydrophone, l'unité d'acquisition de données comporte des moyens pour échantillonner ledit signal reçu et des moyens de détection pour détecter, par corrélation numérique, la présence du signal basse fréquence dans le signal échantillonné et délivrer une commande de largage au mécanisme de largage si ledit signal basse fréquence est détecté.

Par ailleurs, la structure porteuse de la station est constituée par une enceinte sphérique en verre placée à l'intérieur d'une coque de protection, laquelle enceinte sphérique est résistante à la pression hydrostatique présente à des profondeurs pouvant atteindre plusieurs milliers de mètres. Le lest est attaché à la structure porteuse par des cordons élastiques fixés, par une première extrémité, audit lest et, par une deuxième extrémité, à un anneau métallique destructible par électrolyse.

Le mécanisme de largage comporte un interrupteur commandé par les moyens de détection de l'unité d'acquisition de données. Lorsqu'il reçoit une commande de largage, l'interrupteur fait passer un courant électrique dans l'anneau métallique pour le détruire et libérer le lest.

D'autres caractéristiques et avantages de l'invention apparaîtront à la lecture de description détaillée qui suit et qui est faite en référence aux dessins annexés, parmi lesquels :

- la figure 1 est une vue schématique en coupe d'une station sismique de fond de mer conforme à l'invention;
- la figure 2 est vue de dessus de la station sismique de fond de mer de la figure 1;
- la figure 3 est un exemple de réalisation d'une unité d'acquisition de données de mesure et de commande de largage;
- les figures 4A et 4B représentent respectivement des signaux en bande de base affectés à des clés de référence clé0 et clé1 utilisées dans le signal de largage; et
- les figures 5A et 5B illustrent la détection de pics de corrélation pour déterminer respectivement les bits de valeur 0 et de valeur 1 dans le signal reçu par l'hydrophone de la station.

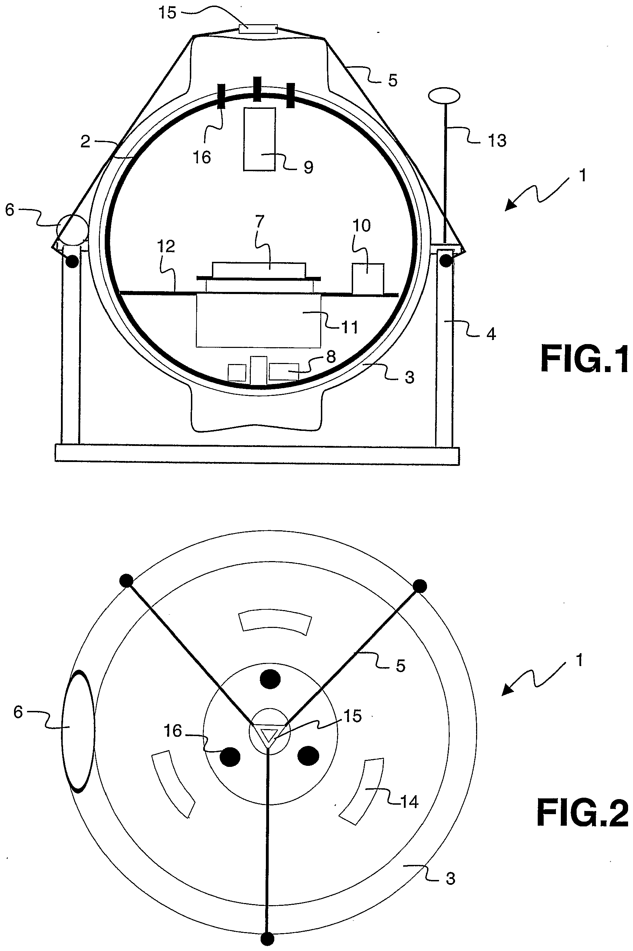

Un mode de réalisation d'une station sismique de fond de mer conforme à l'invention est représenté aux figures 1 et 2. La figure 1 est une vue schématique en coupe de la station et la figure 2 est une vue de dessus. La station, référencée 1, comporte une sphère en verre 2 placée dans une coque de protection 3 en matière plastique, un lest détachable 4 attaché à la coque de protection par des cordons élastiques 5, et un hydrophone 6 monté à l'extérieur de la coque de protection. L'ensemble coque de protection 3 + sphère 2 présente une flottabilité positive et constitue la partie de station à récupérer en surface après une session de mesures.

La sphère en verre 2 est creuse et est capable de résister à la pression hydrostatique régnant à la profondeur d'utilisation, à savoir, jusqu'à des profondeurs de 6000 mètres environ. Elle est constituée de deux hémisphères à bords jointifs, réunis en faisant le vide à l'intérieur de la sphère. Elle contient une unité 7 pour traiter les signaux provenant de l'hydrophone 6 et, éventuellement les signaux provenant de géophones 8 destinés à détecter les ondes de cisaillement selon trois axes x, y et z, un flash lumineux 9, un émetteur VHF 10 et des piles ou batteries rechargeables 11 destinées à alimenter l'ensemble des circuits électroniques de la station. Tous ces circuits, à l'exception des géophones et du flash lumineux, sont fixés à un plateau support 12 fixe à l'intérieur de la sphère. Ce plateau est disposé horizontalement et collé à l'intérieur de la sphère. Le flash lumineux 9 est installé dans la partie haute de la sphère, par exemple en haut d'un mat fixé au plateau 12, et les géophones 8 sont placés sur le fond de la sphère.

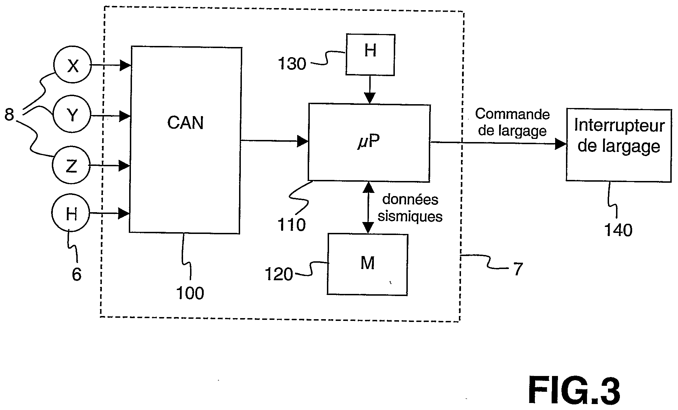

L'unité 7 est chargée de traiter les signaux sismiques provenant de l'hydrophone 6 et des géophones 8, ainsi que les signaux acoustiques de largage du lest captés par l'hydrophone. Ce traitement sera décrit de manière détaillée en référence à la figure 3.

Le flash lumineux 9 et l'émetteur VHF 10 qui est doté d'une antenne 13 à l'extérieur de la sphère, sont utilisés pour améliorer le repérage de la station sismique lorsqu'elle est remontée à la surface. Des fenêtres 14 sont ménagées à cet effet dans la coque de protection 3 pour laisser passer la lumière produite par le flash 9. Le flash et l'émetteur VHF sont de préférence mis en marche lorsque la station émerge de la surface de l'eau. Leur mise en marche est par exemple déclenchée en réponse à un signal provenant d'un capteur détectant un changement soudain de la pression régnant autour de la station.

Dans l'exemple de réalisation des figures 1 et 2, les cordons élastiques 5 chargés d'attacher le lest 4 à la coque de protection 3 sont de type sandow ou équivalents. Ils sont au nombre de trois et sont reliés, par leur extrémité inférieure, à trois points du lest 4 et, par leur extrémité supérieure à un anneau métallique 15 de forme triangulaire positionné sur le haut de la coque de protection 3. Lorsqu'une commande de largage est reçue par la station, on fait passer un courant électrique à travers l'anneau qui, au contact de l'eau, se rompt par électrolyse et libère le lest.

Par ailleurs, la sphère 2 est étanche et munie de passages étanches 16 pour les différents câbles ou connecteurs qui relient notamment l'unité 7 à l'hydrophone 6 ou l'unité 7 à un ordinateur extérieur pour récupérer les données sismiques lorsque la station est ramenée sur le navire. L'un des passages est également utilisé pour faire le vide à l'intérieur de la sphère.

Un schéma fonctionnel de l'unité 7 et du dispositif de largage du lest est proposé à la figure 3. L'unité comprend essentiellement un convertisseur analogique-numérique 100 pour produire des échantillons numériques des signaux provenant de l'hydrophone 6 et des géophones 8, un microprocesseur 110 pour traiter lesdits échantillons numériques et une mémoire 120, par exemple de type compact flash, pour stocker les échantillons des signaux sismiques. L'unité 7 est de préférence complétée par un circuit d'horloge 130 de grande précision venant se substituer à l'horloge interne du microprocesseur pour obtenir des données sismiques avec une datation précise.

Selon l'invention, le microprocesseur 110 délivre, en plus des données sismiques à stocker dans la mémoire 120, des commandes de largage activant la fermeture d'un interrupteur de largage 140. Cet interrupteur est connecté d'une part à la borne positive des batteries rechargeables 11 et d'autre part à l'anneau triangulaire 15. Lorsque le microprocesseur 110 délivre un ordre de largage, l'interrupteur 140 se ferme, ce qui déclenche alors le passage d'un courant électrique à travers l'anneau triangulaire 15. L'anneau se disloque alors par électrolyse et libère le lest.

Pour augmenter la fiabilité du dispositif de largage du lest, les batteries rechargeables 11 de la station sismique sont de préférence formées de deux blocs séparés, l'un destiné à alimenter l'unité 7, et l'autre destiné à alimenter le mécanisme de largage du lest. Si le niveau de tension du bloc affecté à l'unité 7 passe en dessous d'un seuil de bon fonctionnement de l'unité, on prévoit alors de déclencher automatiquement le largage du lest par la commande de l'interrupteur 140. Pour améliorer les conditions de largage du lest 4, on peut également prévoir de tendre fortement les sandows 5 contre la coque de protection 3 de façon à optimiser la libération de la station au moment du largage.

Nous allons maintenant décrire en détail la commande de largage et le fonctionnement de l'unité 7. Selon l'invention, l'unité 7 est en permanence à l'écoute des ondes sismiques et des ordres de largage. Elle accomplit ainsi l'acquisition normale des données sismiques à partir des signaux provenant de l'hydrophone 6 et des géophones 8, et détecte par ailleurs la présence de commandes de largage dans les signaux provenant de l'hydrophone. Si une telle commande est détectée, elle déclenche le largage du lest qui maintient la station sur le fond marin.

Les commandes de largage sont des ondes acoustiques produites par un transducteur acoustique. Ce sont en effet les ondes acoustiques qui se propagent le mieux dans le milieu marin. Pour optimiser la détection des commandes de largage par l'unité 7, un signal basse fréquence est préférable dans la mesure où la chaîne d'acquisition des données sismiques de l'unité est basse fréquence. Toutefois, pour s'accorder avec les contraintes de l'émission d'un signal depuis la surface vers des profondeurs pouvant atteindre plusieurs milliers de mètres, il est nécessaire de moduler ce signal basse fréquence par un signal porteur de fréquence plus élevée, par exemple par un signal ayant une fréquence comprise entre 8 et 12 kHz.

La commande acoustique émise est constituée d'une succession de bits de valeur 0 ou 1. On choisit de préférence une séquence courte pouvant être répétée aisément. Cette commande comporte par exemple 12 bits. On dispose alors de $2^{12}$ combinaisons, soit 4096 codes différents, permettant d'obtenir une commande de largage individuelle pour chaque station. On pourra ainsi, pour un parc de 1000 stations, gérer 4 commandes acoustiques par station. Des commandes passe-partout autres que celle de largage peuvent alors être envisagées par exemple pour déclencher simultanément le début ou la fin de l'acquisition de données pour plusieurs stations.

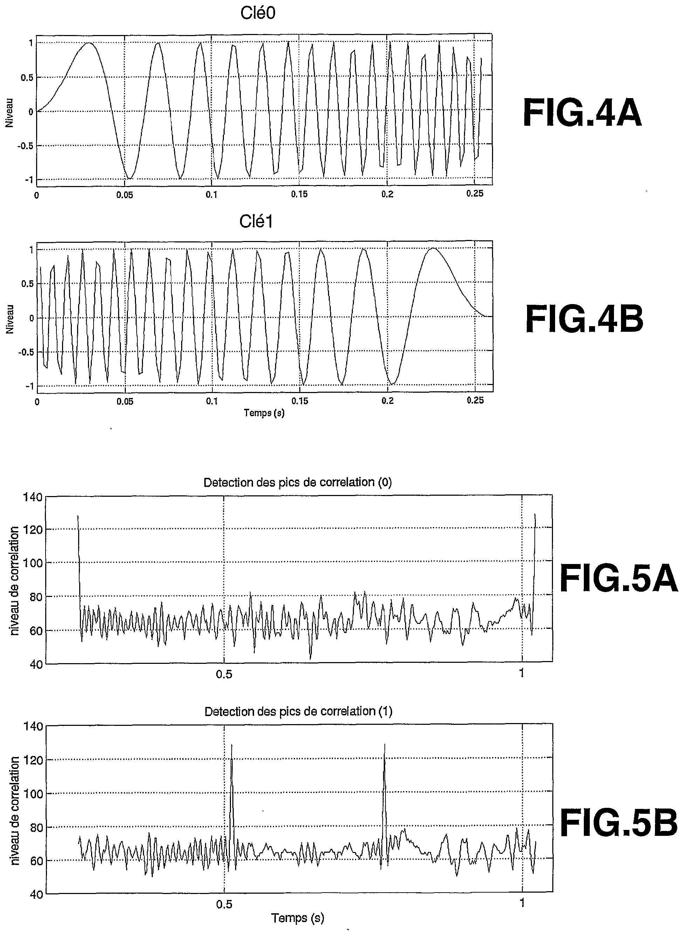

Les bits de valeur 0 ou 1 de la commande de largage sont appelés dans la suite de la description clés de référence, et sont désignés respectivement par clé0 et clé1. Un signal élémentaire particulier est associé à chacune de ces clés de référence. Pour permettre la reconnaissance de ces signaux élémentaires à coup sûr, il faut choisir un signal que l'on ne retrouve pas dans la nature ou dans les activités liées à la mer (mesures, transmissions, bruit des navires, ...). Ces signaux élémentaires sont par exemple des signaux acoustiques modulés linéairement entre deux fréquences f1 et f2 comme montrés aux figures 4A et 4B. Dans ces exemples, la clé 0 est un signal modulé en fréquence dont la fréquence varie linéairement depuis la fréquence f1 jusqu'à la fréquence f2, avec f2 > f1. A l'inverse, la clé 1 est un signal modulé en fréquence dont la fréquence varie linéairement depuis la fréquence f2 jusqu'à la fréquence f1. La durée des signaux élémentaires est par exemple fixée à 0,256 s.

La génération de la commande de largage consiste par exemple à générer un signal représentatif d'un code de 12 bits comprenant des 0 et des 1 et à moduler le signal obtenu par un signal porteur dans la bande 8-12 KHz. Le signal de commande de largage est donc constitué de 12 signaux élémentaires consécutifs modulés par un signal porteur haute fréquence. La durée du signal de largage est par exemple égale à 3,072 s. Ce signal est transmis à la station sismique à la fin de la session de mesures.

Coté réception, la station sismique est chargée de détecter ce signal de commande de largage. Cette détection est réalisée par l'unité 7 qui effectue les étapes suivantes : échantillonnage, binarisation, stockage dans un registre à décalage, corrélation avec les clés de référence, détection de pics de corrélation et détection de commande.

Dans l'unité 7, le signal reçu par l'hydrophone 6 et les géophones 8 est tout d'abord échantillonné avec une fréquence de 500 Hz par exemple. Cet échantillonnage, comme le reste des opérations de l'unité 7, peut être géré d'un point vue logiciel par une procédure d'interruption appelée toutes les 2 ms par un contrôleur d'interruption périodique du microprocesseur 110. La fréquence d'échantillonnage est choisie de manière à ne pas saturer le fonctionnement du microprocesseur 110. Pour un microprocesseur fonctionnant à 20 MHz, nous avons choisi une fréquence d'échantillonnage de 500 Hz permettant de ne pas augmenter de façon drastique la consommation de l'unité 7.

Les échantillons sont ensuite binarisés afin de s'affranchir de l'amplitude du signal et de simplifier l'opération de corrélation numérique à suivre. Par cette opération, on ne conserve que l'information de signe de l'échantillon: 1 si la valeur de l'échantillon est positive, 0 si elle est négative, ou vice versa.

Les échantillons binarisés (0 ou 1) sont stockés dans un registre à décalage du microprocesseur ayant une profondeur de 128 bits par exemple. Les valeurs de ce registre sont décalées vers la gauche toutes les 2 ms. Un nouvel échantillon est ainsi enregistré toutes les 2 ms dans la cellule la plus à droite du registre. Un nouveau code de 128 échantillons apparaît donc dans le registre à décalage toutes les 2 ms. On effectue donc toutes les 2 ms une corrélation numérique entre les 128 échantillons de ce code et les 128 échantillons des clés clé0 et clé1 préalablement échantillonnées. Cette corrélation numérique est réalisée via une opération de type OU exclusif de la manière suivante :

$$\texttt{Corrélation\_clé0} = \sum_{N=1}^{128} \texttt{éch[N] XOR clé0[N]}$$

$$\texttt{Corrélation\_clé1} = \sum_{N=1}^{128} \texttt{éch[N] XOR clé1[N]}$$

Par ces calculs, on obtient deux niveaux Corrélation_clé0 et Corrélation_clé1 ayant une valeur comprise entre 0 et 128, proportionnelle à la corrélation entre le code enregistré dans le registre à décalage et les clés clé0 ou clé1.

En théorie, si le code enregistré dans le registre à décalage est identique à l'une des clés de référence, l'une des valeurs Corrélation_clé0 ou Corrélation_clé1 sera égale à 128. Dans la pratique, compte tenu du bruit, des trajets multiples, de l'effet Doppler et de la non-synchronisation des horloges entre l'émetteur et la station sismique, on obtiendra une valeur plus faible.

On obtient ainsi toutes les 2 ms deux niveaux de corrélation (Corrélation_clé0 et Corrélation_clél) que l'on peut représenter graphiquement en fonction du temps comme illustré aux figures 5A et 5B. Les pics de corrélation correspondent dans la figure 5A à la présence de bits de valeur 0 dans le signal reçu par l'hydrophone et, dans la figure 5B, à des bits de valeur 1. Ces pics sont détectés par comparaison avec un seuil de référence, par exemple égal à 100.

Si le microprocesseur détecte un pic de corrélation supérieur au seuil de référence toutes les 0,256 s et que ces pics de corrélation correspondent à la séquence de 12 bits du signal de largage, il délivre alors une commande de largage à destination du mécanisme de largage pour libérer le lest.

En conclusion, la station sismique telle que décrite ci-dessus présente les avantages suivants :

- faible encombrement en raison de la fusion des fonctions d'acquisition de données et de commande de largage;
- coût de construction réduit;
- possibilité de recharger les batteries, de réinitialiser l'unité d'acquisition des données et de transférer les données sismiques vers un ordinateur extérieur, par exemple par une liaison série, sans ouverture de la sphère;
- faible coût de fonctionnement.

Au titre des améliorations possibles, on pourra envisager d'effectuer une compression des données avant leur stockage dans la mémoire 120.

Bien qu'un seul mode de réalisation ait été décrit, il va de soi que l'homme du métier pourrait apporter des modifications ou changements par exemple à la forme de la coque de protection ou au mécanisme de largage du lest.

**Revendications**

1. Station de fond de mer destinée à effectuer des mesures in situ comprenant une structure porteuse (2,3) à flottabilité positive à laquelle est associée au moins un lest détachable (4) pour amener ladite structure porteuse au fond de l'eau le temps d'une session de mesure, la structure porteuse comprenant au moins un hydrophone (6), une unité d'acquisition de données (7) pour enregistrer des données de mesure provenant de l'hydrophone et un dispositif de largage dudit lest détachable,
**caractérisée en ce que** l'unité d'acquisition de données (7) est en outre apte à commander le dispositif de largage en réponse à un ordre acoustique de largage reçu par l'hydrophone (6).

2. Station selon la revendication 1, **caractérisée en ce que** l'ordre de largage est un signal acoustique basse fréquence modulé par un signal porteur ayant par exemple une fréquence comprise entre 8 et 12 KHz.

3. Station selon la revendication 2, **caractérisée en ce que** ledit signal acoustique basse fréquence est propre à la station.

4. Station selon l'une quelconque des revendications 2 ou 3, **caractérisée en ce que** ledit signal acoustique basse fréquence comprend une pluralité de signaux élémentaires d'un premier type et d'un second type consécutifs représentant une séquence de bits propre à ladite station sismique, les signaux élémentaires du premier type et du second type représentant respectivement des bits de valeur 0 et des bits de valeur 1, ou inversement.

5. Station selon la revendication 4, **caractérisée en ce que** les signaux élémentaires du premier type sont des signaux modulés linéairement en fréquence depuis la fréquence f1 jusqu'à la fréquence f2, avec f2>f1, et les signaux élémentaires du second type sont des signaux modulés linéairement en fréquence depuis la fréquence f2 jusqu'à la fréquence f1, ou inversement.

6. Station selon l'une des revendications précédentes, **caractérisée en ce que**, pour détecter un ordre de largage dans le signal reçu par l'hydrophone (6), l'unité d'acquisition de données (7) comporte des moyens (100) pour échantillonner ledit signal reçu et des moyens de détection (110) pour détecter la présence du signal basse fréquence dans le signal échantillonné par corrélation numérique et délivrer une commande de largage au mécanisme de largage si ledit signal basse fréquence est détecté.

7. Station selon l'une des revendications précédentes, **caractérisée en ce que** la structure porteuse est constituée par une enceinte sphérique en verre (2) placée à l'intérieur d'une coque de protection (3), laquelle enceinte sphérique (2) est résistante à la pression hydrostatique présente à des profondeurs pouvant atteindre plusieurs milliers de mètres.

8. Station selon la revendication 7, **caractérisée en ce qu'**elle comporte en outre un flash lumineux (9) placée à l'intérieur de ladite enceinte sphérique (2) pour produire de la lumière lorsque la structure porteuse est remontée à la surface après largage du lest, la coque de protection (3) étant ajourée pour laisser passer la lumière produite par ledit flash lumineux (9) .

9. Station selon l'une quelconque des revendications précédentes, **caractérisée en ce que** le lest (4) est attaché à la structure porteuse par des cordons élastiques (5) fixés, par une première extrémité, audit lest (4) et, par une deuxième extrémité, à un anneau métallique (15) destructible par électrolyse.

10. Station selon la revendication 9, **caractérisée en ce que** le mécanisme de largage comporte un interrupteur (140) commandé par les moyens de détection (100) de l'unité d'acquisition de données (7), lequel interrupteur fait passer un courant électrique dans ledit anneau métallique (15) pour le détruire lorsqu'il reçoit une commande de largage.

**Patentansprüche**

1. Meeresbodenstation, die zur Durchführung von in situ-Messungen bestimmt ist, umfassend eine tragende Struktur (2, 3) mit positiver Schwimmfähigkeit, der mindestens ein lösbarer Ballast (4) zugeordnet ist, um die tragende Struktur für die Zeit einer Messsitzung auf den Grund des Wassers zu führen, wobei die tragende Struktur mindestens ein Hydrophon (6), eine Datenerfassungseinheit (7) zur Aufzeichnung von vom Hydrophon kommenden Messdaten und eine Abwurfvorrichtung des lösbaren Ballasts umfasst,

**dadurch gekennzeichnet, dass** die Datenerfassungseinheit (7) ferner imstande ist, die Abwurfvorrichtung in Beantwortung eines von dem Hydrophon (6) erhaltenen akustischen Abwurfbefehls zu steuern.

2. Station nach Anspruch 1, **dadurch gekennzeichnet, dass** der Abwurfbefehl ein von einem Trägersignal mit beispielsweise einer Frequenz zwischen 8 und 12 kHz moduliertes akustisches Niederfrequenzsignal ist.

3. Station nach Anspruch 2, **dadurch gekennzeichnet, dass** das akustische Niederfrequenzsignal stationsspezifisch ist.

4. Station nach einem der Ansprüche 2 oder 3, **dadurch gekennzeichnet, dass** das akustische Niederfrequenzsignal eine Vielzahl elementarer Signale eines ersten Typs und eines zweiten Typs, die aufeinanderfolgen, umfasst, die eine Bitsequenz darstellen, die für die seismische Station spezifisch ist, wobei die elementaren Signale des ersten Typs und des zweiten Typs jeweils Bits mit dem Wert 0 und Bits mit dem Wert 1 oder umgekehrt darstellen.

5. Station nach Anspruch 4, **dadurch gekennzeichnet, dass** die elementaren Signale des ersten Typs ab der Frequenz f1 bis zur Frequenz f2 linear frequenzmodulierte Signale sind mit f2>f1 und die elementaren Signale des zweiten Typs ab der Frequenz f2 bis zur Frequenz f1 linear frequenzmodulierte Signale sind oder umgekehrt.

6. Station nach einem der vorangehenden Ansprüche, **dadurch gekennzeichnet, dass**, um in dem von dem Hydrophon (6) empfangenen Signal einen Abwurfbefehl zu erkennen, die Datenerfassungseinheit (7) Mittel (100) aufweist, um das empfangene Signal abzutasten, und Erkennungsmittel (110), um durch numerische Korrelation die Anwesenheit des Niederfrequenzsignals in dem abgetasteten Signal zu erkennen und dem Abwurfmechanismus einen Abwurfbefehl zu erteilen, wenn das Niederfrequenzsignal ermittelt wird.

7. Station nach einem der vorangehenden Ansprüche, **dadurch gekennzeichnet, dass** die tragende Struktur aus einem kugeligen Glasbehälter (2) besteht, die im Inneren einer Schutzschale (3) platziert ist, wobei der kugelige Behälter (2) gegenüber dem hydrostatischen Druck, der in Tiefen vorhanden ist, die mehrere tausend Meter erreichen können, widerstandsfähig ist.

8. Station nach Anspruch 7, **dadurch gekennzeichnet, dass** sie ferner einen Lichtblitz (9) aufweist, der im Inneren des kugeligen Behälters (2) platziert ist, um Licht zu erzeugen, wenn die tragende Struktur nach dem Abwerfen des Ballasts auf die Oberfläche geholt wird, wobei die Schutzschale (3) durchbrochen ist, um das von dem Lichtblitz (9) erzeugte Licht hindurchzulassen.

9. Station nach einem der vorangehenden Ansprüche, **dadurch gekennzeichnet, dass** der Ballast (4) mittels elastischer Seile (5) an der tragenden Struktur angebracht ist, die mit einem ersten Ende an dem Ballast (4) und mit einem zweiten Ende an einem durch Elektrolyse zerstörbaren Metallring (15) befestigt sind.

10. Station nach Anspruch 9, **dadurch gekennzeichnet, dass** der Abwurfmechanismus einen Schalter (140) aufweist, der von den Erkennungsmitteln (100) der Datenerfassungseinheit (7) gesteuert wird, wobei der Schalter einen elektrischen Strom durch den Metallring (15) schickt, um ihn zu zerstören, wenn er einen Abwurfbefehl erhält.

**Claims**

1. Ocean-bottom station designed to perform in situ measurements, comprising a support structure (2, 3) with positive buoyancy with which there is associated at least one detachable ballast (4) to convey said support structure to the bottom of the ocean for the period of a measurement session, the support structure including at least one hydrophone (6), one data acquisition unit (7) to record measurement data and one device for the releasing of said detachable ballast,
   **characterized in that** the data acquisition unit (7) is furthermore capable of controlling the releasing device in response to an acoustic release command received by the hydrophone (6).

2. Station according to claim 1, **characterized in that** the release command is a low-frequency acoustic signal modulated by a carrier signal having for example a frequency of 8 to 12 KHz.

3. Station according to claim 2, **characterized in that** said low-frequency acoustic signal is proper to the station.

4. Station according to any one of claims 2 and 3, **characterized in that** said low-frequency acoustic signal comprises a plurality of consecutive elementary signals of a first type and of a second type representing a sequence of bits proper to said seismic station, the elementary signals of the first type and of the second type respectively representing bits with a value 0 and bits with a value 1, or vice versa.

5. Station according to claim 4, **characterized in that** the elementary signals of the first type are signals that are linearly modulated in frequency from the frequency f1 to the frequency f2, with f2>f1, and the elementary signals of the second type are signals linearly modulated in frequency from the frequency f2 to the frequency f1, or vice versa.

6. Station according to one of the above claims, **characterized in that**, to detect a release command in the signal received by the hydrophone (6), the data-acquisition unit (7) comprises means (100) to sample said received signal and detection means (110) to detect the presence of the low-frequency signal in the sampled signal by digital correlation and deliver a release command to the releasing mechanism if said low-frequency signal is detected.

7. Station according to one of the above claims, **characterized in that** the support structure of the station is constituted by a spherical glass enclosure (2) placed inside a protection shell (3), said spherical enclosure (2) being resistant to the hydrostatic pressure present at depths that may go up to several thousands of meters.

8. Station according to claim 7, **characterized in that** it furthermore comprises a flash light (9) placed inside said spherical enclosure (2) to produce light when the support structure is raised to the surface after the releasing of the ballast, the protection shell (3) being given apertures to let through the light produced by said flash light (9).

9. Station according to any of the above claims, **characterized in that** the ballast (4) is attached to the support structure by elastic cords (5) that are fixed, by a first end, to said ballast (4) and, by a second end, to a metal ring (15) destructible by electrolysis.

10. Station according to claim 9, **characterized in that** releasing mechanism comprises a switch (140) controlled by the detection means (100) of the data acquisition unit (7), said switch making an electrical current pass into the metal ring (15) to destroy it when it receives a release command.

**FIG.1**

**FIG.2**

FIG.3

Clé0

# FIG.4A

Clé1

# FIG.4B

Detection des pics de correlation (0)

# FIG.5A

Detection des pics de correlation (1)

# FIG.5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9305411 A
- US 4446537 A
- US 3316531 A
- US 4138658 A

**Littérature non-brevet citée dans la description**

- **ORB-A NEW OCEAN BOTTOM SEISMIC DATA LOGGER.** *Wooding,* 1997